# EUROPÄISCHE PATENTSCHRIFT

(11) **EP 2 755 354 B1**
(45) Veröffentlichungstag und Bekanntmachung des Hinweises auf die Patenterteilung: **12.08.2015**
(21) Anmeldenummer: 12199668.0
(22) Anmeldetag: 28.12.2012
(51) Int. Cl.: H04L 12/40

(54) **Verfahren zur Übertragung von Adreß-, Diagnose- und/oder Konfigurationsinformationen und Steckermodul für Infrastrukturgerät**
Method for transmission of address, diagnosis and/or configuration information and connector module for infrastructure device
Procédé de transmission d'informations d'adresse, de diagnostic et/ou de configuration et module enfichable pour appareil d'infrastructure

(43) Veröffentlichungstag der Anmeldung: 16.07.2014
(73) Patentinhaber: Siemens Aktiengesellschaft, 80333 München (DE)
(72) Erfinder: Mehn, Martin, 91074 Herzogenaurach (DE)

(56) Entgegenhaltungen:
- US-A1- 2012 140 641
- US-B1- 6 442 248
- US-B1- 6 765 991

## Beschreibung

Die vorliegende Erfindung betrifft eine Übertragung von Adreß-, Diagnose und/oder Konfigurationsinformationen zwischen einem an ein Kommunikationsnetz angeschlossenen Infrastrukturgerät und einem Diagnosegerät, insbesondere in einem industriellen Automatisierungssystem. Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

An Kommunikationsgeräten, Automatisierungsgeräten mit Kommunikationsnetzschnittstelle oder sonstigen Infrastrukturgeräten sind üblicherweise Leuchtdioden zur Signalisierung von Zustands- oder Fehlerinformationen gut sichtbar auf einer Vorderseite vorgesehen. Die Signalisierung kann dabei beispielsweise farblich oder durch Blinken mit einer bestimmten Frequenz erfolgen. Vielfach ist eine solche Signalisierung interpretationsbedürftig und ohne eine geräteindividuelle technische Dokumentation äußerst schwierig. Zur eingehenden Diagnose von signalisierten Zustands- oder Fehlerinformationen, insbesondere zur Vermeidung von Stillstandszeiten in technischen Anlagen, werden häufig rechnerbasierte Diagnosegeräte verwendet, die mit einem zu überwachenden Infrastrukturgerät gekoppelt werden. Bei einer großen Anzahl von Leuchtdioden an einem Infrastrukturgerät ist eine automatische Erfassung und Auswertung von signalisierten Zustands- oder Fehlerinformationen durch ein Diagnosegerät problematisch. Um eine Störung durch benachbarte Leuchtdioden zu vermeiden, muß eine Abtasteinheit des Diagnosegeräts nämlich genau auf eine zu überwachende Leuchtdiode ausgerichtet werden.

Alternativ zu einer Signalisierung von Zustands- oder Fehlerinformationen mittels Leuchtdioden werden hierfür zunehmend auch kleine Displays an Infrastrukturgeräten verwendet, die eine Darstellung aussagekräftigerer Informationen ermöglichen. Auf solchen Displays kann beispielsweise eine IP-Adresse eines Infrastrukturgeräts dargestellt werden, so daß ein Diagnosegerät anhand der IP-Adresse eine Verbindung zum Infrastrukturgerät aufbauen kann. Zustands- und Fehlerinformationen oder IP-Adressen können grundsätzlich auch per Infrarotschnittstelle zwischen einem Infrastrukturgerät und einem Diagnosegerät ausgetauscht werden. Problematisch bei Verwendung einer Infrarotschnittstelle ist jedoch, daß eine ungestörte Sichtverbindung zwischen einem Empfänger am Diagnosegerät und einem Sender am Infrastrukturgerät erforderlich ist. Insbesondere in großen technischen Anlagen ist dies nicht immer gewährleistet. Darüber hinaus kann eine IP-Adresse an einem Infrastrukturgerät auch durch ein Schild mit einer Klartextangabe oder einem Strichcode dargestellt werden. Bei beengten Platzverhältnissen sind jedoch Zuordnung des Schildes zu einem Infrastrukturgerät und Lesbarkeit des Schildes problematisch, insbesondere bei schwachem Licht oder Reflexionen.

Aus DE 101 10 776 A1 ist ein Verfahren bekannt, das zur Zuordnung einer mobilen elektronischen Bedien- bzw. Beobachtungseinrichtung zu einer Maschine oder einem Maschinenteil dient. Dabei wird in einem Zuordnungs- bzw. Anmeldeprozeß zwischen der Bedien- bzw. Beobachtungseinrichtung und einer korrespondierenden Gegensteile an der jeweiligen Maschine mittels Schnittstellen zur gerichteten drahtlosen Anpeilung der korrespondierenden Gegenstelle eine eindeutige Zuordnungs- bzw. Anmeldeverbindung aufgebaut. Alternativ dazu kann mittels in Sendereichweite bzw. Empfangsempfindlichkeit abgestimmten Sende- bzw. Empfangseinrichtungen mit einem begrenzten örtlichen Funktions- bzw. Wirkungsbereich eine eindeutige Zuordnungs- bzw. Anmeldeverbindung aufgebaut werden. Nach erkannter und erfolgter Zuordnung wird eine Bedienung bzw. Beobachtung der Maschine bzw. des Maschinenteils über ein anderes standardmäßig vorgesehenes Datenübertragungsmittel vorgenommen. Dies kann beispielsweise über eine feste Vernetzung bzw. über eine drahtlose Verbindung zwischen der Bedien- bzw. Beobachtungseinrichtung und der ausgewählten Maschine erfolgen.

In KR20080301307A ist ein Auslesen von Kommunikationsgeräteadressen mittels RFID-Tags beschrieben. Ein LED-basiertes Verfahren zur Übertragung von Adreß-, Diagnose- und/oder Konfigurationsinformationen von Kommunikationsnetz-Infrastrukturgeräten ist aus der älteren europäischen Patentanmeldung mit dem Anmeldeaktenzeichen 12186084.5 bekannt. Adreß-, Diagnose- bzw. Konfigurationsinformationen werden als überlagerte codierte Symbolsequenz durch zumindest eine vorgegebene Leuchtdiode zusätzlich zu angezeigten Geräte- oder Kommunikationsstatusinformationen signalisiert. Die zumindest eine vorgegebene Leuchtdiode, welche die Adreß-, Diagnose- bzw. Konfigurationsinformationen signalisiert, wird anhand einer Codierung der die Adreß-, Diagnose- bzw. Konfigurationsinformationen umfassenden Symbolsequenz durch ein Diagnosegerät identifiziert. Die zumindest eine identifizierte Leuchtdiode wird mittels einer Kamera des Diagnosegeräts optisch abgetastet. Aus einer abgetasteten codierten Symbolsequenz werden die Adreß-, Diagnose- bzw. Konfigurationsinformationen durch das Diagnosegerät ermittelt.

Aus US 2012/140641 A1 ist ein Verfahren zur Übertragung von Diagnoseinformationen zwischen einem an ein Kommunikationsnetz angeschlossenen Infrastrukturgerät und einem Diagnosegerät bekannt, bei dem die Diagnoseinformationen dem an das Kommunikationsnetz angeschlossenen Infrastrukturgerät zugeordnet sind. Die Diagnoseinformationen werden durch eine Steuerungseinheit, die einem Koppelelement des Infrastrukturgeräts zugeordnet ist, ausgelesen und an zumindest einem Anschluß des Infrastrukturgeräts bereitgestellt.

Der vorliegenden Erfindung liegt die Aufgabe zugrunde, ein zuverlässiges und einfach zu realisierendes Verfahren zur Übertragung von Adreß-, Diagnose- bzw. Konfigurationsinformationen zwischen einem an ein Kommunikationsnetz angeschlossenen Infrastrukturgerät und einem Diagnosegerät zu schaffen sowie eine geeignete technische Realisierung anzugeben.

Diese Aufgabe wird erfindungsgemäß durch ein Verfahren mit den in Patentanspruch 1 angegebenen Merkmalen und durch ein Steckermodul für ein Kommunikationsnetz-Infrastrukturgerät mit den in Patentanspruch 13 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Übertragung von Adreß-, Diagnose- bzw. Konfigurationsinformationen, die einem an ein Kommunikationsnetz angeschlossenen Infrastrukturgerät zugeordnet sind, werden die Adreß-, Diagnose- bzw. Konfigurationsinformationen durch eine Steuerungseinheit, die einem Koppelelement des Infrastrukturgeräts zugeordnet ist, ausgelesen und an zumindest einem Anschluß des Infrastrukturgeräts bereitgestellt. Die Steuerungseinheit kann beispielsweise ein Controller eines Backplane Switch sein. Das Infrastrukturgerät ist vorzugsweise ein Router, ein Switch, eine Bridge, ein Hub, ein dezentrales Peripheriegerät eines industriellen Automatisierungssystems oder Automatisierungsgerät mit Kommunikationsnetzschnittstelle. Die Adreß-, Diagnose- bzw. Konfigurationsinformationen werden zyklisch bzw. ereignisabhängig an ein Speicherelement eines mit einem Anschluß des Infrastrukturgeräts verbundenen Steckermoduls übertragen und dort gepuffert. Eine Übertragung der Adreß-, Diagnose- bzw. Konfigurationsinformationen an das Speicherelement des Steckermoduls wird vorzugsweise durch die Steuerungseinheit veranlaßt.

Die im Speicherelement des Steckermoduls gepufferten Adreß-, Diagnose- und/oder Konfigurationsinformationen werden entsprechend dem erfindungsgemäßen Verfahren durch ein Diagnosegerät über eine Drahtlos-Kommunikationsschnittstelle zwischen dem Steckermodul und dem Diagnosegerät abgerufen. Dabei weisen das Steckermodul und das Diagnosegerät jeweils eine Drahtlos-Kommunikationseinheit auf. Das Diagnosegerät kann beispielsweise ein portabler Computer, ein Tablet-PC oder ein Smartphone sein. Mittels des erfindungsgemäßen Verfahrens können wartungs- und diagnoserelevante Adreß-, Diagnose- bzw. Konfigurationsinformationen auf einfache Weise auch an bestehenden Infrastrukturgeräten erfaßt werden.

Entsprechend einer bevorzugten Ausgestaltung des erfindungsgemäßen Verfahrens umfaßt die Drahtlos-Kommunikationseinheit des Steckermoduls einen Funk-Transponder. Darüber hinaus ist die Drahtlos-Kommunikationsschnittstelle zwischen dem Steckermodul und dem Diagnosegerät vorzugsweise für Near Field Communication (NFC) ausgestaltet und eingerichtet. Damit eine zuverlässige Zuordnung von ausgelesenen Adreß-, Diagnose- bzw. Konfigurationsinformationen zu einem überwachten Infrastrukturgerät möglich.

Die Adreß-, Diagnose- bzw. Konfigurationsinformationen werden entsprechend einer weiteren vorteilhaften Ausgestaltung des erfindungsgemäßen Verfahrens über einen seriellen Datenbus an das Speicherelement bzw. die Drahtlos-Kommunikationseinheit des Steckermoduls übertragen. Der serielle Datenbus ist vorzugsweise ein I2C-Bus (Inter-Integrated Circuit). Ferner kann das Steckermodul einen Ethernet-I2C-Umsetzer umfassen. Darüber hinaus ist das Steckermodul vorzugsweise eine als Small Form-factor Pluggable ausgestaltete Stecker-Transceiver-Einheit. Damit kann eine Diagnoseschnittstelle besonders einfach für bestehende Infrastrukturgeräte nachgerüstet werden.

Entsprechend einer vorteilhaften Ausgestaltung des erfindungsgemäßen Verfahrens umfassen die Adreß-, Diagnose- bzw. Konfigurationsinformationen in einem Fehlerzustand des Infrastrukturgeräts eine Adreßangabe, insbesondere einen Uniform Ressource Locator, zum Zugriff auf einen Diagnose- bzw. Fehlerbehebungsinformationen bereitstellenden Server. Dies ermöglicht eine schnelle Diagnose bzw. Fehlerbehebung. In entsprechender Weise können die Adreß-, Diagnose- bzw. Konfigurationsinformationen während einer Inbetriebnahme des Infrastrukturgeräts eine Adreßangabe zum Zugriff auf einen Server umfassen, der Bearbeitungsmittel für konfigurierbare Parameter des Infrastrukturgeräts bereitstellt, beispielsweise eine Webseite mit Konfigurationseinstellungen für das Infrastrukturgerät. Dies ermöglicht eine schnelle und effiziente Inbetriebnahme eines Infrastrukturgeräts.

Das erfindungsgemäße Steckermodul für ein Kommunikationsnetz-Infrastrukturgerät, das mehrere über ein Koppelelement miteinander schaltbar verbindbare Anschlüsse und eine Speichereinheit für Adreß-, Diagnose- bzw. Konfigurationsinformationen umfaßt, weist ein Speicherelement zur Pufferung zyklisch bzw. ereignisabhängig durch das Infrastrukturgerät übertragener Adreß-, Diagnose- bzw. Konfigurationsinformationen auf. Darüber hinaus ist eine Drahtlos-Kommunikationseinheit zur abrufbaren Bereitstellung der im Speicherelement gepufferten Adreß-, Diagnose- bzw. Konfigurationsinformationen über eine Drahtlos-Kommunikationsschnittstelle an ein Diagnosegerät vorgesehen. Außerdem ist das Steckermodul zur Durchführung eines Verfahrens entsprechend vorangehender Beschreibung ausgestaltet und eingerichtet.

Entsprechend einer vorteilhaften Ausgestaltung des erfindungsgemäßen Steckermoduls umfaßt die Drahtlos-Kommunikationseinheit einen Funk-Transponder. Dabei ist die Drahtlos-Kommunikationseinheit vorzugsweise für Near Field Communication (NFC) ausgestaltet und eingerichtet. Zur Übertragung der Adreß-, Diagnose- bzw. Konfigurationsinformationen an das Speicherelement bzw. die Drahtlos-Kommunikationseinheit kann beispielsweise ein seriellen Datenbus vorgesehen sein, insbesondere ein I2C-Bus (Inter-Integrated Circuit). Zusätzlich ist in letzterem Fall bevorzugt ein Ethernet-I2C-Umsetzer vorgesehen, der ein zuverlässige Übertragung von Adreß-, Diagnose- bzw. Konfigurationsinformationen von einem Infrastrukturgerät an ein NFC-Tag ermöglicht. Zur Realisierung einer kompakten, einfach für Nachrüstlösungen verwendbaren Bauweise ist das Steckermodul entsprechend einer bevorzugten Ausgestaltung eine als Small Form-factor Pluggable ausgestaltete Stecker-Transceiver-Einheit.

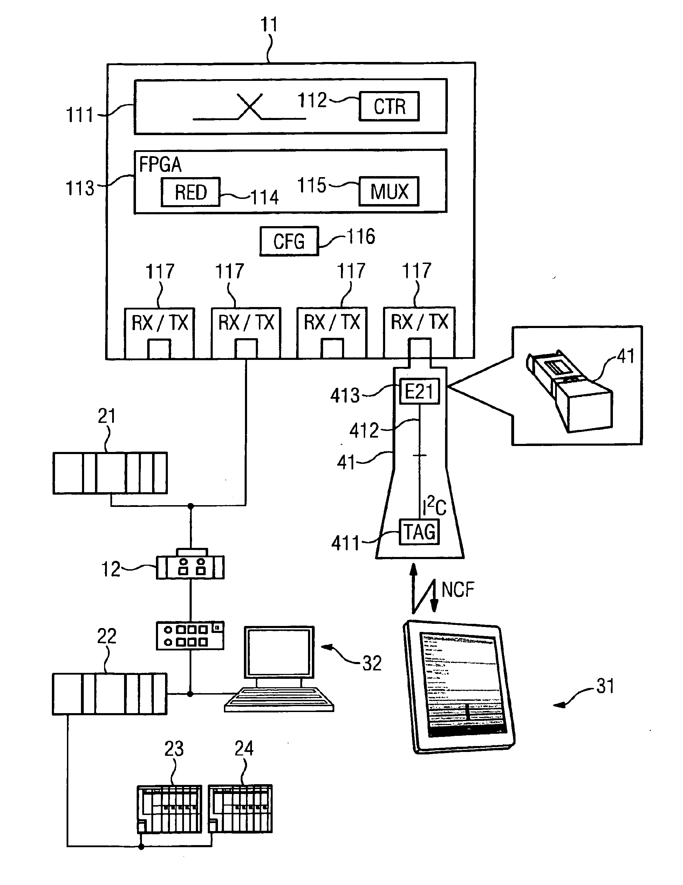

Die vorliegende Erfindung wird nachfolgend an einem Ausführungsbeispiel anhand der Zeichnung näher erläutert. Es zeigt die
- Figur: eine Anordnung mit mehreren Automatisierungsgeräten und Kommunikationsgeräten eines industriellen Automatisierungssystems sowie mit einem Diagnosegerät für eine Ermittlung von Adreß-, Diagnose- bzw. Konfigurationsinformationen.

Die in der Figur dargestellte Anordnung umfaßt mehrere miteinander vernetzte Komponenten eines industriellen Automatisierungssystems. Hierzu zählen als Infrastrukturgeräte eine erste speicherprogrammierbare Steuerung 21 zur Überwachung und Steuerung einer Maschine, ein mit der speicherprogrammierbaren Steuerung 21 verbundener zweiter Switch 11, ein mit dem Switch 11 verbundener Router 12 sowie eine zweite speicherprogrammierbare Steuerung 22. Der zweiten speicherprogrammierbaren Steuerung 22 sind zwei dezentrale Peripheriegeräte 23, 24 als weitere Infrastrukturgeräte zugeordnet, die mit der zweiten speicherprogrammierbaren Steuerung 22 über ein industrielles Kommunikationsnetz verbunden sind. Neben dem Switch 11 sind mit dem Router 12 die zweite speicherprogrammierbare Steuerung 22 sowie ein Rechner 32 mit Bedien- und Beobachtungsfunktionen verbunden. Die Infrastrukturgeräte 11-12, 21-24 umfassen jeweils eine Speichereinheit 116 für dem jeweiligen Infrastrukturgerät zugeordnete Adreß-, Diagnose- bzw. Konfigurationsinformationen sowie zumindest eine Sende-/Empfangseinheit 117 mit einen Kommunikationsnetz-Anschluß. In der Figur dies exemplarisch für den Switch 11 dargestellt, für den nachfolgend eine Übertragung von Adreß-, Diagnose- bzw. Konfigurationsinformationen stellvertretend für sämtliche Infrastrukturgeräte beschreiben wird.

Zur Übertragung von Adreß-, Diagnose- bzw. Konfigurationsinformationen vom Switch 11 an ein Diagnosegerät 31 werden die Adreß-, Diagnose- bzw. Konfigurationsinformationen durch eine Steuerungseinheit 112, die einem Koppelelement 111 des Switchs 11 zugeordnet ist, aus der Speichereinheit 116 ausgelesen und an den Anschlüssen des Switchs 11 bereitgestellt. Der Switch 11 weist mehrere jeweils zumindest einen Anschluß umfassende Sende-/Empfangseinheiten 117 für Verbindungen mit an ein industrielles Kommunikationsnetz angeschlossenen Netzinfrastruktur- oder Kommunikationsgeräten entsprechend einem Spannbaum-, Parallel-, Ring- oder Medienredundanzprotokoll auf. Zu Kommunikationsgeräten zählen auch Kommunikationsmodule umfassende Automatisierungsgeräte zur Überwachung, Regelung bzw. Steuerung eines technischen Prozesses, beispielsweise in einer technischen Anlage zur Fertigungs- oder Prozeßautomatisierung. Die Sende-/Empfangseinheiten 117 bzw. Anschlüsse des Switchs 11 sind durch das Koppelelement 111 schaltbar miteinander verbindbar. Das Koppelelement 111 ist im vorliegenden Ausführungsbeispiel ein Hochgeschwindigkeitsbus, vorzugsweise ein Backplane Switch mit einem integriertem Controller, der durch die Steuerungseinheit 112 gebildet wird. Alternativ hierzu kann das Koppelelement 111 grundsätzlich auch mittels eines Matrix-Schaltnetzes realisiert sein.

Als Mittel zur Nachrichtenübermittlung innerhalb eines industriellen Kommunikationsnetzes umfaßt der Switch 11 neben dem Koppelelement 111 und den Sende-/Empfangseinheiten 117 eine Signalverarbeitungseinheit 113. Die Signalverarbeitungseinheit 113 ist vorzugsweise mittels eines Field Programmable Gate Arrays (FPGA) realisiert und umfaßt eine Redundanzbehandlungseinheit 114 sowie eine Multiplexereinheit 115. Jeweils zwei Sende-/Empfangseinheiten 117 können zum Anschluß an ein Kommunikationsnetz mit Ring- oder Parallelredundanz eine identische Netzadresse bzw. einen identischen MAC-Geräteidentifikator aufweisen. Die Multiplexereinheit 115 dient zur parallelen Weiterleitung redundant zu sendender Datenrahmen an zwei Sende-/Empfangseinheiten 117, während die Redundanzbehandlungseinheit 114 zur Verarbeitung von zwei Sende-/Empfangseinheiten 117 empfangener redundanter Datenrahmen vorgesehen ist. Die Redundanzbehandlungseinheit 114 ist insbesondere für eine Detektion empfangener redundanter Datenrahmen eingerichtet.

Die Adreß-, Diagnose- bzw. Konfigurationsinformationen werden zyklisch oder ereignisabhängig an ein Speicherelement eines mit einem Anschluß des Switchs 11 verbundenen Steckermoduls 41 übertragen und dort gepuffert. Dabei wird eine Übertragung der Adreß-, Diagnose- bzw. Konfigurationsinformationen an das Speicherelement des Steckermoduls 41 durch die Steuerungseinheit 112 veranlaßt. Das Speicherelement des Steckermoduls 41 ist im vorliegenden Ausführungsbeispiel in einen Funk-Transponder 411 integriert, der eine Drahtlos-Kommunikationseinheit umfaßt. Alternativ zu einem Funk-Transponder 411 kann grundsätzlich auch ein Funk-Transmitter verwendet werden. Der Funk-Transponder 411 dient zur abrufbaren Bereitstellung der im Speicherelement gepufferten Adreß-, Diagnose- bzw. Konfigurationsinformationen über eine Drahtlos-Kommunikationsschnittstelle an ein Diagnosegerät 31. Das Diagnosegerät 31 weist hierzu eine entsprechende Drahtlos-Kommunikationseinheit auf. Auf diese Weise können die im Speicherelement des Steckermoduls 41 gepufferten Adreß-, Diagnose- bzw. Konfigurationsinformationen durch das Diagnosegerät 31 abgerufen werden. Im vorliegenden Ausführungsbeispiel ist die Drahtlos-Kommunikationsschnittstelle zwischen dem Steckermodul 41 und dem Diagnosegerät 31 für Near Field Communication (NFC) ausgestaltet und eingerichtet.

Das Steckermodul 41 ist vorzugsweise eine als Small Form-factor Pluggable (SFP) ausgestaltete Stecker-Transceiver-Einheit. Über einen I²C-Bus (Inter-Integrated Circuit) des Steckermoduls 41 werden die Adreß-, Diagnose- bzw. Konfigurationsinformationen im vorliegenden Ausführungsbeispiel an den Funk-Transponder 411 übertragen. Das Steckermodul umfaßt dabei außerdem einen Ethernet-I2C-Umsetzer 413.

Als Diagnosegerät für die Infrastrukturgeräte ist im vorliegenden Ausführungsbeispiel ein Tablet-PC 31 vorgesehen, der für Infrastrukturgeräte, wie Router, Switches, Bridges, Hubs, dezentrale Peripheriegeräte, Automatisierungsgeräte mit Kommunikationsnetzschnittstelle, Anzeigegeräte, Eingabegeräte oder Drucker geeignet ist. Grundsätzlich könnte als Diagnosegerät auch ein portabler Computer oder ein Smartphone verwendet werden.

Die Adreß-, Diagnose- bzw. Konfigurationsinformationen umfassen im vorliegenden Ausführungsbeispiel ergänzende Informationen zur Fehlermeldung, die auf einem Touch-Display am Tablet-PC 31 dargestellt werden. Hierzu ist auf dem Tablet-PC eine Kontroll-App installiert, die nach Abrufen der Adreß-, Diagnose- bzw. Konfigurationsinformationen eine Web-Seite mit weiterführenden Diagnoseinformationen aufruft. Alternativ dazu kann die Kontroll-App auch eine verknüpfte Diagnose-App aufrufen.

Mittels des Tablet-PC 31 können auch Adreß-, Diagnose- bzw. Konfigurationsinformationen aus der ersten speicherprogrammierbaren Steuerung 21 abgerufen werden, die einen Stopzustand einer Zentraleinheit der ersten speicherprogrammierbaren Steuerung 21 und Adreßinformationen für eine Web-Seite zur Fehlerdiagnose signalisieren. In diesem Fall öffnet die auf dem Tablet-PC 31 installierte Kontroll-App eine der ersten speicherprogrammierbaren Steuerung 21 zugeordnete Web-Seite zur Fehlerdiagnose. In entsprechender Weise können mittels des Tablet-PC 31 auch Adreß-, Diagnose- bzw. Konfigurationsinformationen aus einem dezentralen Peripheriegerät 23, 24 abgerufen werden, die einen Stopzustand und Adreßinformationen des dezentralen Peripheriegeräts 23, 24 signalisieren. Anhand dieser Adreßinformationen kann eine auf dem Tablet-PC installierte Projektierungssoftware, wie SIMATIC STEP 7, auf das dezentrale Peripheriegerät 23, 24 zugreifen und eine Fehlerdiagnose liefern.

In einem Fehlerzustand eines Infrastrukturgeräts können die Adreß-, Diagnose- bzw. Konfigurationsinformationen entsprechend einem bevorzugten Ausführungsbeispiel eine Adreßangabe, beispielsweise einen Uniform Ressource Locator (URL), zum Zugriff auf einen Diagnose- bzw. Fehlerbehebungsinformationen bereitstellenden Server umfassen. Analog dazu können die Adreß-, Diagnose- bzw. Konfigurationsinformationen während einer Inbetriebnahme eines Infrastrukturgeräts eine Adreßangabe zum Zugriff auf einen Server umfassen, der eine Konfigurationsumgebung für das jeweilige Infrastrukturgerät bereitstellt.

## Patentansprüche

1. Verfahren zur Übertragung von Adreß-, Diagnose- und/oder Konfigurationsinformationen zwischen einem an ein Kommunikationsnetz angeschlossenen Infrastrukturgerät und einem Diagnosegerät, bei dem
- die Adreß-, Diagnose- und/oder Konfigurationsinformationen dem an das Kommunikationsnetz angeschlossenen Infrastrukturgerät zugeordnet sind,
- die Adreß-, Diagnose- und/oder Konfigurationsinformationen durch eine Steuerungseinheit, die einem Koppelelement des Infrastrukturgeräts zugeordnet ist, ausgelesen und an zumindest einem Anschluß des Infrastrukturgeräts bereitgestellt werden,
**dadurch gekennzeichnet, daß**
- die Adreß-, Diagnose- und/oder Konfigurationsinformationen zyklisch und/oder ereignisabhängig an ein Speicherelement eines mit einem Anschluß des Infrastrukturgeräts verbundenen Steckermoduls übertragen und dort gepuffert werden,
- die im Speicherelement des Steckermoduls gepufferten Adreß-, Diagnose- und/oder Konfigurationsinformationen durch ein Diagnosegerät über eine Drahtlos-Kommunikationsschnittstelle zwischen dem Steckermodul und dem Diagnosegerät abgerufen werden, wobei das Steckermodul und das Diagnosegerät jeweils eine Drahtlos-Kommunikationseinheit aufweisen.

2. Verfahren nach Anspruch 1,
bei dem die Drahtlos-Kommunikationseinheit des Steckermoduls einen Funk-Transponder umfaßt.

3. Verfahren nach Anspruch 2,
bei dem die Drahtlos-Kommunikationsschnittstelle zwischen dem Steckermodul und dem Diagnosegerät für Near Field Communication (NFC) ausgestaltet und eingerichtet ist.

4. Verfahren nach einem der Ansprüche 1 bis 3,
bei dem die Adreß-, Diagnose- und/oder Konfigurationsinformationen über einen seriellen Datenbus an das Speicherelement und/oder die Drahtlos-Kommunikationseinheit des Steckermoduls übertragen werden.

5. Verfahren nach Anspruch 4,
bei dem der serielle Datenbus ein I2C-Bus (Inter-Integrated Circuit) ist.

6. Verfahren nach Anspruch 5,
bei dem das Steckermodul einen Ethernet-I2C-Umsetzer umfaßt.

7. Verfahren nach einem der Ansprüche 4 bis 6,
bei dem das Steckermodul eine als Small Form-factor Pluggable ausgestaltete Stecker-Transceiver-Einheit ist.

8. Verfahren nach einem der Ansprüche 1 bis 7,
bei dem eine Übertragung der Adreß-, Diagnose- und/oder Konfigurationsinformationen an das Speicherelement des Steckermoduls durch die Steuerungseinheit veranlaßt wird.

9. Verfahren nach einem der Ansprüche 1 bis 8,
bei dem die Adreß-, Diagnose- und/oder Konfigurationsinformationen in einem Fehlerzustand des Infrastrukturgeräts eine Adreßangabe, insbesondere einen Uniform Ressource Locator, zum Zugriff auf einen Diagnose- und/oder Fehlerbehebungsinformationen bereitstellenden Server umfassen.

10. Verfahren nach einem der Ansprüche 1 bis 9,
bei dem die Adreß-, Diagnose- und/oder Konfigurationsinformationen während einer Inbetriebnahme des Infrastrukturgeräts eine Adreßangabe, insbesondere einen Uniform Ressource Locator, zum Zugriff auf einen Server umfassen, der Bearbeitungsmittel für konfigurierbare Parameter des Infrastrukturgeräts bereitstellt.

11. Verfahren nach einem der Ansprüche 1 bis 10,
bei dem das Infrastrukturgerät ein Router, ein Switch, eine Bridge, ein Hub, ein dezentrales Peripheriegerät eines industriellen Automatisierungssystems oder Automatisierungsgerät mit Kommunikationsnetzschnittstelle ist.

12. Verfahren nach einem der Ansprüche 1 bis 11,
bei dem das Diagnosegerät ein portabler Computer, ein Tablet-PC oder ein Smartphone ist.

13. Steckermodul für ein Kommunikationsnetz-Infrastrukturgerät, das mehrere über ein Koppelelement miteinander schaltbar verbindbare Anschlüsse und eine Speichereinheit für Adreß-, Diagnose- und/oder Konfigurationsinformationen umfaßt, mit
- einem Speicherelement zur Pufferung zyklisch und/oder ereignisabhängig durch das Infrastrukturgerät übertragener Adreß-, Diagnose- und/oder Konfigurationsinformationen,
- einer Drahtlos-Kommunikationseinheit zur abrufbaren Bereitstellung der im Speicherelement gepufferten Adreß-, Diagnose- und/oder Konfigurationsinformationen über eine Drahtlos-Kommunikationsschnittstelle an ein Diagnosegerät,
wobei das Steckermodul zur Durchführung eines Verfahrens nach einem der Ansprüche 1 bis 12 ausgestaltet und eingerichtet ist.

14. Steckermodul nach Anspruch 13,
bei dem die Drahtlos-Kommunikationseinheit einen Funk-Transponder umfaßt.

15. Steckermodul nach Anspruch 14,
bei dem die Drahtlos-Kommunikationseinheit für Near Field Communication (NFC) ausgestaltet und eingerichtet ist.

16. Steckermodul nach einem der Ansprüche 13 bis 15,
bei dem zur Übertragung der Adreß-, Diagnose- und/oder Konfigurationsinformationen an das Speicherelement und/oder die Drahtlos-Kommunikationseinheit ein seriellen Datenbus vorgesehen ist.

17. Steckermodul nach Anspruch 16,
bei dem der serielle Datenbus ein I2C-Bus (Inter-Integrated Circuit) ist.

18. Steckermodul nach Anspruch 17,
bei dem ein Ethernet-I2C-Umsetzer vorgesehen ist.

19. Steckermodul nach einem der Ansprüche 13 bis 18,
bei dem das Steckermodul eine als Small Form-factor Pluggable ausgestaltete Stecker-Transceiver-Einheit ist.

## Claims

1. Method for transmitting address, diagnosis and/or configuration information between an infrastructure device connected to a communication network and a diagnosis device, in which
- the address, diagnosis and/or configuration information is associated with the infrastructure device connected to the communication network,
- the address, diagnosis and/or configuration information is read by a control unit, which is associated with a coupling element of the infrastructure device, and provided on at least one connection of the infrastructure device,
**characterized in that**
- the address, diagnosis and/or configuration information is transmitted to a memory element of a connector module, which is connected to a connection of the infrastructure device, cyclically and/or on an event-dependent basis and is buffered there,
- the address, diagnosis and/or configuration information buffered in the memory element of the connector module is retrieved by a diagnosis device via a wireless communication interface between the connector module and the diagnosis device, wherein the connector module and the diagnosis device each have a wireless communication unit.

2. Method according to Claim 1,
in which the wireless communication unit of the connector module comprises a radio transponder.

3. Method according to Claim 2,
in which the wireless communication interface between the connector module and the diagnosis device is designed and set up for near field communication (NFC).

4. Method according to one of Claims 1 to 3,
in which the address, diagnosis and/or configuration information is transmitted to the memory element and/or the wireless communication unit of the connector module via a serial data bus.

5. Method according to Claim 4,
in which the serial data bus is an I2C bus (interintegrated circuit).

6. Method according to Claim 5,
in which the connector module comprises an Ethernet I2C converter.

7. Method according to one of Claims 4 to 6,
in which the connector module is a connector transceiver unit embodied as a small form-factor pluggable.

8. Method according to one of Claims 1 to 7,
in which transmission of the address, diagnosis and/or configuration information to the memory element of the connector module is prompted by the control unit.

9. Method according to one of Claims 1 to 8,
in which the address, diagnosis and/or configuration information comprises, in an error state of the infrastructure device, an address statement, particularly a uniform resource locator, for accessing a server providing diagnosis and/or error correction information.

10. Method according to one of Claims 1 to 9,
in which the address, diagnosis and/or configuration information comprises, during start-up of the infrastructure device, an address statement, particularly a uniform resource locator, for accessing a server that provides processing means for configurable parameters of the infrastructure device.

11. Method according to one of Claims 1 to 10,
in which the infrastructure device is a router, a switch, a bridge, a hub, a local peripheral of an industrial automation system or an automation device with a communication network interface.

12. Method according to one of Claims 1 to 11,
in which the diagnosis device is a portable computer, a tablet PC or a smart phone.

13. Connector module for a communication network infrastructure device that comprises a plurality of connections, which can be switchably connected to one another via a coupling element, and a memory unit for address, diagnosis and/or configuration information, having
- a memory element for buffering address, diagnosis and/or configuration information that is transmitted by the infrastructure device cyclically and/or on an event-dependent basis,
- a wireless communication unit for retrievably providing the address, diagnosis and/or configuration information buffered in the memory element for a diagnosis device via a wireless communication interface,
wherein the connector module is designed and set up to perform a method according to one of Claims 1 to 12.

14. Connector module according to Claim 13,
in which the wireless communication unit comprises a radio transponder.

15. Connector module according to Claim 14,
in which the wireless communication unit is designed and set up for near field communication (NFC).

16. Connector module according to one of Claims 13 to 15,
in which a serial data bus is provided for the purpose of transmitting the address, diagnosis and/or configuration information to the memory element and/or the wireless communication unit.

17. Connector module according to Claim 16,
in which the serial data bus is an I2C bus (interintegrated circuit).

18. Connector module according to Claim 17,
in which an Ethernet I2C converter is provided.

19. Connector module according to one of Claims 13 to 18,
in which the connector module is a connector transceiver unit embodied as a small form-factor pluggable.

## Revendications

1. Procédé de transmission d'informations d'adresse, de diagnostic et/ou de configuration entre un appareil d'infrastructure raccordé à un réseau de communication et à un appareil de diagnostic, dans lequel
- on affecte les informations d'adresse, de diagnostic et/ou de configuration à l'appareil d'infrastructure raccordé au réseau de communication,
- on lit les informations d'adresse, de diagnostic et/ou de configuration par une unité de commande, qui est affectée à un élément de couplage de l'appareil d'infrastructure, et on les met à disposition sur au moins un accès de l'appareil d'infrastructure,
**caractérisé en ce que**
- on transmet les informations d'adresse, de diagnostic et/ou de configuration cycliquement et/ou en fonction d'un événement à un élément de mémorisation d'un module de connecteur relié à un accès de l'appareil d'infrastructure et on les y met en mémoire tampon,
- on appelle les informations d'adresse, de diagnostic et/ou de configuration, mises en mémoire tampon dans l'élément de mémorisation du module de connecteur, par un appareil de diagnostic par l'intermédiaire d'une interface de communication sans fil entre le module de connecteur et l'appareil de diagnostic, le module de connecteur et l'appareil de diagnostic ayant respectivement une unité de communication sans fil.

2. Procédé suivant la revendication 1,
dans lequel l'unité de communication sans fil du module de connecteur comprend un transpondeur radio.

3. Procédé suivant la revendication 2,
dans lequel l'interface de communication sans fil entre le module de connecteur et l'appareil de diagnostic est conformée et agencée pour une Near Field Communication (NFC).

4. Procédé suivant l'une des revendications 1 à 3,
dans lequel on transmet les informations d'adresse, de diagnostic et/ou de configuration par l'intermédiaire d'un bus de données série à l'élément de mémorisation et/ou à l'unité de communication sans fil du module de connecteur.

5. Procédé suivant la revendication 4,
dans lequel le bus de données série est un bus I2C (Inter-Integrated Circuit).

6. Procédé suivant la revendication 5,
dans lequel le module de connecteur comprend un convertisseur éthernet-I2C.

7. Procédé suivant l'une des revendications 4 à 6,
dans lequel le module de connecteur est une unité connecteur-émetteur-récepteur conformée en Small Form-factor Pluggable.

8. Procédé suivant l'une des revendications 1 à 7,
dans lequel on provoque une transmission des informations d'adresse, de diagnostic et/ou de configuration à l'élément de mémorisation du module de connecteur par l'unité de commande.

9. Procédé suivant l'une des revendications 1 à 8,
dans lequel les informations d'adresse, de diagnostic et/ou de configuration comprennent, dans un état de défaut de l'appareil d'infrastructure, une indication d'adresse, notamment une Uniform Ressource Locator, pour l'accès à un serveur mettant à disposition des informations de diagnostic et/ou de suppression de défaut.

10. Procédé suivant l'une des revendications 1 à 9,
dans lequel les informations d'adresse, de diagnostic et/ou de configuration comprennent, pendant une mise en fonctionnement de l'appareil d'infrastructure, une indication d'adresse, notamment une Uniform Ressource Locator, pour l'accès à un serveur, qui met à disposition des moyens de traitement de paramètres configurables de l'appareil d'infrastructure.

11. Procédé suivant l'une des revendications 1 à 10,
dans lequel l'appareil d'infrastructure est un routeur, un commutateur, un pont, un concentrateur, un appareil périphérique décentralisé d'un système d'automatisation industrielle ou un appareil d'automatisation ayant des interfaces de réseau de communication.

12. Procédé suivant l'une des revendications 1 à 12,
dans lequel l'appareil de diagnostic est un ordinateur portable, un PC-tablette ou un téléphone intelligent.

13. Module de connecteur pour un appareil d'infrastructure de réseau de communication, qui comprend plusieurs accès pouvant être reliés entre eux de manière commutable par l'intermédiaire d'un élément de couplage et une unité de mémorisation d'informations d'adresse, de diagnostic et/ou de configuration, comprenant
- un élément de mémorisation pour mettre en mémoire tampon cycliquement et/ou en fonction d'un événement des informations d'adresse, de diagnostic et/ou de configuration transmises par l'appareil d'infrastructure,
- une unité de communication sans fil pour mettre, avec possibilité d'appel, à disposition d'un appareil de diagnostic par l'intermédiaire d'une interface de communication sans fil les informations d'adresse, de diagnostic et/ou de configuration mises en mémoire tampon dans l'élément de mémorisation,
dans lequel le module de connecteur est conformé et conçu pour effectuer un procédé suivant l'une des revendications 1 à 12.

14. Module de connecteur suivant la revendication 13,
dans lequel l'unité de communication sans fil comprend un transpondeur radio.

15. Module de connecteur suivant la revendication 14,
dans lequel l'unité de communication sans fil est conformée et conçue pour une Near Field Communication (NFC).

16. Module de connecteur suivant l'une des revendications 13 à 15,
dans lequel il est prévu un bus de données série pour transmettre des informations d'adresse, de diagnostic et/ou de configuration à l'élément de mémorisation et/ou à l'unité de communication sans fil.

17. Module de connecteur suivant la revendication 16,
dans lequel le bus de données série est un bus I2-C (Inter-Intergrated Circuit).

18. Module de connecteur suivant la revendication 17,
dans lequel il est prévu un convertisseur I2-C éthernet.

19. Module de connecteur suivant l'une des revendications 13 à 18,
dans lequel le module de connecteur est une unité connecteur-émetteur-récepteur conformée en Small Form-factor Pluggable.
